# EUROPEAN PATENT APPLICATION

(11) **EP 1 703 085 A2**
(43) Date of publication of application: **20.09.2006**
(21) Application number: 06250032.7
(22) Date of filing: 05.01.2006
(51) Int. Cl.: F01D 25/16

(54) **A multi-shaft arrangement for a turbine engine**

(30) Priority: 14.03.2005 GB 0502324
(71) Applicant: ROLLS-ROYCE PLC, London, SW1E 6AT (GB)
(72) Inventor: Richards, Martyn, Burton on Trent DE13 0YJ (GB)
(74) Representative: Gunn, Michael Alan

(57) **Abstract**

Elimination of a previous intermediate inter-shaft locating bearing 108 allows smaller core sizes to be achieved and avoids relatively sophisticated design complications in order to provide that bearing 108. Thus, an inner shaft 200 is supported at one end by a mounting bearing 205 and at its other end by a spaced bearing combination 220 upon a static cradle structure 221. The spaced bearing combination 220 comprises bearings 222, 223 which can be varied in terms of spacing, stiffness of support upon the cradle 221 and sprung resilience in the bearing races in order to tune shaft vibration to avoid critical frequencies occurring in the normal rotational running range of an engine incorporating the arrangement.

## Description

The present invention relates to multi shaft arrangements for turbine engines and more particularly to 3-shaft engines which require appropriate support for operation over differing rotational speeds.

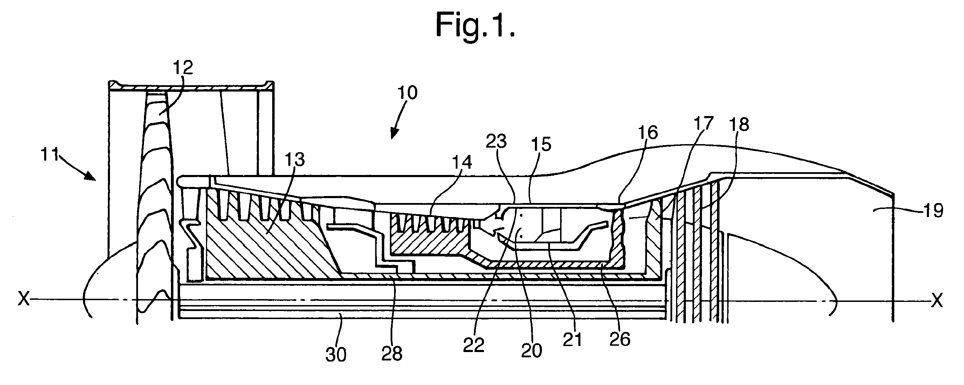

Referring to Fig. 1, a gas turbine engine is generally indicated at 10 and comprises, in axial flow series, an air intake 11, a propulsive fan 12, an intermediate pressure compressor 13, a high pressure compressor 14, a combustor 15, a turbine arrangement comprising a high pressure turbine 16, an intermediate pressure turbine 17 and a low pressure turbine 18, and an exhaust nozzle 19.

The gas turbine engine 10 operates in a conventional manner so that air entering the intake 11 is accelerated by the fan 12 which produce two air flows: a first air flow into the intermediate pressure compressor 13 and a second air flow which provides propulsive thrust. The intermediate pressure compressor compresses the air flow directed into it before delivering that air to the high pressure compressor 14 where further compression takes place.

The compressed air exhausted from the high pressure compressor 14 is directed into the combustor 15 where it is mixed with fuel and the mixture combusted. The resultant hot combustion products then expand through, and thereby drive, the high, intermediate and low pressure turbines 16, 17 and 18 before being exhausted through the nozzle 19 to provide additional propulsive thrust. The high, intermediate and low pressure turbines 16, 17 and 18 respectively drive the high and intermediate pressure compressors 14 and 13 and the fan 12 by suitable interconnecting shafts.

In view of the above, it will be appreciated that a turbine engine incorporates a number of generally concentric shafts with appropriate bearings (not shown in Fig. 1) between those shafts to allow rotation. It is necessary to provide the respective shafts in order to couple the low pressure, intermediate pressure and high pressure compressors and turbines in order to achieve turbine engine operation. Design of appropriate inter-shaft locating bearings is well known but is complicated. It will be understood that these inter-shaft locating bearings require a need to balance axial bearing loads and avoid damaging "cross-over" conditions. Nevertheless, it will also be understood that generally an engine will have a range of variable fan speeds and so it is necessary to ensure the shafts are not detrimentally operationally affected by such problems as vibration within the shaft as a result of certain critical frequencies in the running range of the engine. It will be understood that turbo prop type engines will generally have a more limited speed range in view of their use of a variable pitch propeller and so may be easier to specify in terms of avoiding critical frequencies in the running range of the engine.

As indicated above, the traditional solution with respect to multiple shaft arrangements in a turbine engine is to provide an intermediate bearing. However, although it is possible to specify such an intermediate bearing, great care must be taken to ensure appropriate operation and secondly it will be understood that the bearing significantly adds to engine assembly/design complications.

In accordance with the present invention there is provided a multi-shaft arrangement for a turbine engine, the arrangement having an inner shaft supported by bearings to allow relative rotation to other shafts in the arrangement, the arrangement characterised in that the inner shaft is only supported by bearings at each end, a mounting bearing at one end of the shaft to a static structure and a spaced bearing combination at the other end of the shaft, the spaced bearing combination comprising two bearings relatively variable in order to alter the fundamental critical frequency of the shaft for acceptable operation despite a lack of any intermediate bearing for the inner shaft.

Normally, the arrangement comprises three shafts, the inner shaft substantially independently supported compared to an intermediate shaft and an outer shaft.

Generally, the spaced bearings are supported upon a static cradle structure. Generally, the spaced bearings form a two plane encastered support for the inner shaft.

Generally, the spaced bearings are variable in terms of the spacing between them and/or upon the inner shaft and/or structural stiffness and/or sprung bearing resilience.

Typically, the inner shaft is coupled to the low pressure turbine of an engine in use.

Normally, the mounting bearing is also the locating bearing for the inner shaft.

Also in accordance with the present invention there is provided a turbine engine incorporating a multi-shaft arrangement as described above.

An embodiment of the present invention will now be described by way of example and with reference to the accompanying drawings in which;
Fig. 2 is a schematic half cross-section of a conventional 3-shaft bearing arrangement for a turbine engine;
Fig. 3 is a schematic half cross-section of a multi-shaft arrangement in accordance with the present invention;
Fig. 4 is a schematic half cross-section of an alternative supporting bearing in accordance with the present invention; and,
Fig. 5 is a schematic half cross-section of a multi-shaft arrangement for supporting a turbine fan in a turbine engine.

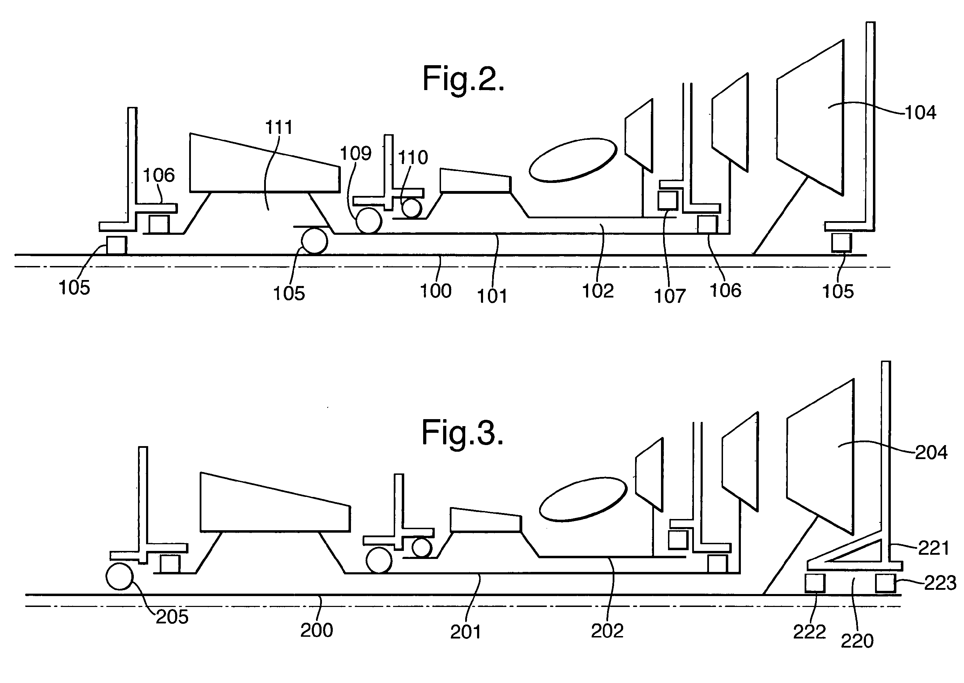

Referring to Fig. 2 illustrating schematically a side cross-section of a 3-shaft arrangement typically consistent with that depicted in Fig. 1. Thus, an inner shaft 100 is associated with an intermediate shaft 101 and an outer shaft 102. The inner shaft 100 is coupled to a low pressure turbine 104 at one end and a low pressure compressor (not shown) at the other. The shafts 100, 101, 102 are supported on respective bearings. End bearings 105, 106, 107 also provide for mounting location whilst intermediate or inter shaft locating bearings 108, 109, 110 are positioned to also facilitate location of the shafts 100, 101, 102 particularly during rotation, thereby these shafts 100, 101, 102 are appropriately supported such that as a result of rotational speed there is no or limited detrimental vibrational frequencies created. It should be understood that it is important to tune any detrimental or destructive critical frequencies into harmless regions of shaft rotational speed, that is to say ranges of rotational speed through which the engine incorporating the shafts 100, 101, 102 only transiently passes.

It will be noted that intermediate or inter-shaft location bearing 108 is at a particularly difficult location in that it is between the shaft 100 and shaft 101 just after the intermediate pressure compressor portion 111 of the shaft 101. In such circumstances specific design and location of this bearing 108 is relatively complex with the bearing mounted in separate frames such that misalignment can occur, thus the shaft 100 is generally required to be two pieces joined with an articulating coupling and this bearing 108 is subject to limited space problems especially as core size reduces relative to fan and low pressure turbine size, as is the case with advanced low specific thrust cycles in view of its location. However, most importantly, provision of the bearing 108 becomes increasingly difficult as the designed engine core diameter narrows. Thus, for smaller engines it becomes increasingly more difficult to appropriately accommodate the inter-shaft bearing 108 in an appropriate multi-shaft arrangement for such engines whilst retaining its support as well as avoidance of frequency induced degradation in multi-shaft arrangements and therefore engine performance. In such circumstances, increasing sophistication is required with respect to the locating bearing 108 in a multi shaft arrangement used in a turbine engine if performance is to be maintained as designed engine core dimensions diminish.

It will be understood if the inner shaft 100 was simply supported by end mounting bearings 105 without an intermediate bearing 108, then there is a significant unsupported length such that with variable rotational speeds, critical frequencies will occur as a result of particularly axial loads placed upon the shaft 100 which will significantly diminish the operational life and/or performance of the shaft 100 in use. Clearly, if there was an acceptable level of predictability with respect to the critical frequencies which would damage the shaft 100 then by appropriate choice of configuration, materials and mountings then occurrence of the critical frequencies could be shifted into harmless regions of engine rotational speed. Such a situation is possible particularly with respect to turbo prop engines where the propellers of those engines typically dictate limited ranges of operational rotational speeds for the engine. However, other turbine engines including turbo fan engines have a wide range of variable fan speeds with the engine operating at different speeds in accordance to different operational loads.

Fig. 3 provides a schematic half cross-section of a multi-shaft arrangement in accordance with the present invention. Thus, an inner shaft 200 is positionally associated with an intermediate shaft 201 and an outer shaft 202. These shafts 200, 201, 202 are respectively supported by mounting bearings to facilitate operational rotation. As previously depicted in Fig. 2 the inner shaft 200 is associated with a low pressure turbine 204 at one end and normally with a low pressure compressor at the other. In accordance with the present invention there is no intermediate or inter shaft bearing between the inner shaft 200 and intermediate shaft 201. Thus, in the normal course of events the inner shaft 200 would be susceptible to critical frequencies as the shafts 200, 201, 202 pass through the variable rotational speeds of a typical turbine engine.

In order to provide for means to enable displacement of the critical frequencies to rotational speeds which are less harmful, the present invention incorporates a spaced bearing combination 220 supported upon a static cradle structure 221. Thus, the inner shaft 200 is located at one end by a mounting bearing 205 in order to retain an established position, whilst at the other end the spaced bearing combination 220 supported upon the cradle 221 is associated with the shaft 200 at spaced positions.

The spaced bearing combination 220 comprises two bearings 222, 223 which allow variation in terms of spaced position both relative to each other and upon the end of the shaft 200 as well as structural stiffness provided through the cradle 221 and in terms of spring resilience of the individual bearings 222, 223. Additionally, bearings 222, 223 may alternatively or in combination with, be mounted on squeeze film races of variable hydraulic stiffness as known in the art but intershaft squeeze film bearings are difficult to achieve as pressurised fluid needs to be supplied. Getting a pressurised fluid supply to intershaft bearings is compromised by engine architecture, and rotating components.

In such circumstances, the shaft 200 can be tuned to acceptable frequency characteristics. Such tuning is achieved by essentially creating an encastered support at the end of the shaft 200. This encastered support is created by use of the cradle 221. In such circumstances the shaft 200 is as indicated encastered rather than simply supported such that there is a raising in the normal shaft frequency. Fine tuning of the fundamental frequencies is achieved by varying the distance between the two bearings 222, 223 in the cradle 221 in addition to alterations in the stiffness of the support cradle 221 and the resilient spring in the bearing races for the bearings 222, 223.

As indicated above, typically the inner shaft 200 will be part of the low pressure turbine arrangement of an engine. A mounting or location bearing 205 will be provided at the front end of the shaft 200. This location bearing 205 essentially determines presentation of the shaft 200 within the arrangement at that end. The location bearing 205 is mounted directly upon a static or stationary structure of the turbine engine.

The two bearings 222, 223 as indicated are supported by essentially a static or stationary cradle 221 structure to provide a two plane encastered support for the shaft 200. Thus, the shaft 200 is restricted in the X-Y planes but may be allowed to move in the Z plane. In such circumstances, by altering the bearing 222, 223 spacing, shaft frequencies can be tuned as required such that fundamentally detrimental shaft frequencies can be configured to occur at rotational speed ranges which are less harmful, that is to say normally only transient in engine operation. The tuning provided by these spaced bearing combinations 220 as indicated may be through altering the spacing of the bearings 222, 223, the structure stiffness (cradle 221) and/or the sprung resilience of the respective bearing races of the bearings 222, 223.

Generally, the positioning of the bearings 222, 223 will be set for particular stages of engine operation. Thus, by appropriate tuning, the shaft frequencies as indicated can be shifted to rotational speed ranges of a less harmful nature. However, through a control process, either from determining shaft frequency specifically or a response to particular rotational speed the bearings 222, 223 may be varied in terms of spacing, robustness of support and resilient sprung nature in response to those variations in rotational speed.

A particular benefit of eliminating the inter shaft bearing (108) in Fig. 2 is that in addition to relieving design and assemble complications it is also possible to provide an engine core of reduced internal core dimensions. Such reductions in core size enable particularly 3-shaft engines to be realised in smaller sizes which can have particular benefits with the introduction of intermediate pressure off-take drives and inherent fuel burn advantages. A further advantage with turbo prop arrangements is that, unlike a standard 3-shaft turbo fan engine it may have a low pressure turbine spool location bearing. Thus, the low pressure turbine spool location bearing 205 takes full turbine axial load without any offset from its propeller because of the desire to avoid axial loading on a reduction gear. Typically, the propeller has its own isolated bearing support. Removing an inter shaft bearing has the advantage of moving the location bearing (205 in Fig. 3) to a substantial structure with little space constraint and preserving the option of intermediate pressure turbine spool contra-rotation for operational efficiency. It will be understood that the other shafts 201, 202 on the respective bearings operate in a substantially conventional manner.

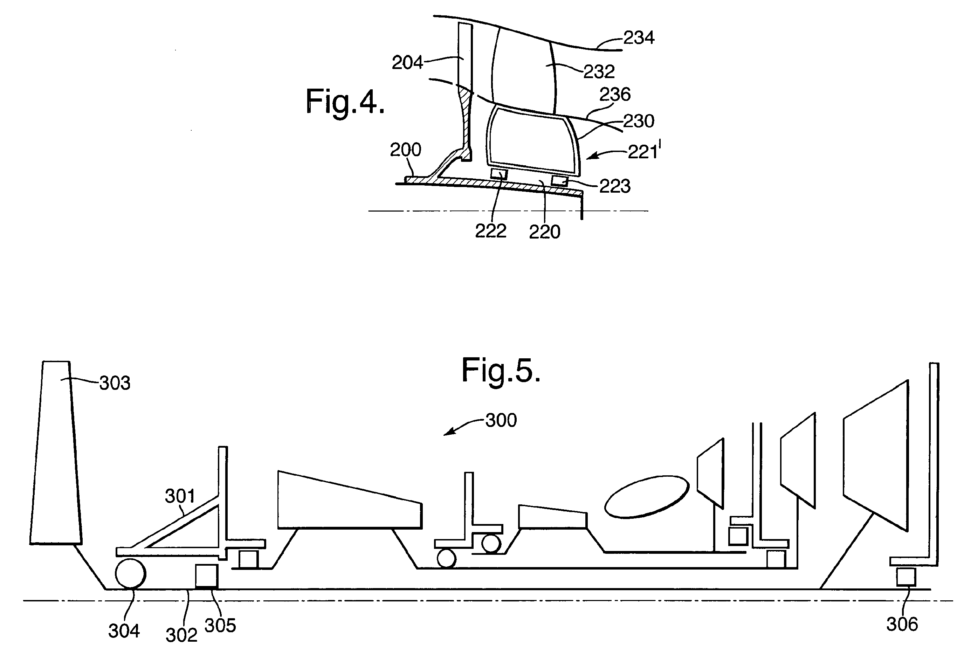

Fig. 4 is a schematic half cross section detailing an alternative arrangement of a cradle structure supporting bearings in accordance with the present invention.

Referring now to Figure 4, the bearings 222, 223 are spaced apart with a 220 in accordance with the invention as described herein and are supported via a cradle 221'. The cradle 221' is an annular structure and in cross-section is four-sided and includes an end panel 230. Similarly, to the arrangement shown in Figure 3 the annular and generally triangular cradle 221 also includes the end panel 230. Cradle 221' is attached radially inward of an annular array of outlet guide vanes 232 which radially extend between radially inner airwash annular wall 236 and radially outer annular wall 234. The vanes 232 are downstream of the low pressure turbine 204 which is rotatably connected to the low pressure shaft 200.

The rigidity of the cradle 221' is enhanced by the inherent stiffness of the outlet guide vane and wall assembly 232, 234, 236, thereby improving the performance and contact of the bearings 222, 223 on the shaft 200.

During development and testing of the engine the stiffness of the cradle 221' is capable of being "tuned" to advantageously damp critical frequencies of the shaft 200. This tuning is made by changing the stiffness of the end panel 230, for example increasing or decreasing the thickness of the panel 230, to alter the overall stiffness of the spaced bearing combination 220. Thus critical frequencies, which may vary slightly from engine to engine and vary during the life of the engine, may be attenuated by a stiffness change to the end panel 230.

Although only a triangular 221 and a four sided 221' cradle are shown other cross-sectional arrangements are possible and are intended to be within the scope of the present invention. Similarly, the cradle 221, 221' may be associated with and stiffened by other engine architecture other than the outlet guide vane assembly 232, 234, 236 without departing from the scope of the present invention. Furthermore, the end panel 230 is not necessarily the downstream panel, but in arrangements where the cradle is positioned forward, such as in Figure 5, the tuneable end panel is preferably an upstream panel.

Referring to Fig. 5 illustrating a multi-shaft arrangement 300 for a turbine engine in which a bearing base 301 is provided to support a fan shaft 302 upon which a turbo fan is supported. It will be appreciated that this shaft 302 will also again be subject to problems with respect to vibration when running at certain critical frequencies. In such circumstances and in accordance with the present invention, a spaced bearing combination is provided comprising bearings 304, 305 in order to support the shaft 302 between that combination 304, 305 and an end bearing 306 without any intermediate bearings which as described previously may themselves cause packaging and other problems.

The combination 304, 305 operates in a similar manner to that described above with respect to space bearing combinations in order to provide a relatively stiff mounting for the shaft 302 which can also be adjusted for critical frequency determination to avoid the detrimental problems described.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A multi-shaft arrangement for a turbine engine, the arrangement having an inner shaft (100, 200) supported by bearings (105-110; 205, 222, 223), (304, 305) to allow relative rotation to other shafts (101, 102, 200) in the arrangement, the arrangement **characterised in that** the inner shaft (100, 200) is only supported by bearings towards each end, a mounting bearing at one end of the shaft to a static structure (205) and a spaced bearing combination (220) at the other end of the shaft, the spaced bearing combination (220) comprising two bearings (222, 223, 304, 305) relatively spaced in order to alter the fundamental critical frequency of the shaft for acceptable operation despite a lack of any intermediate intershaft bearing for the inner shaft.

2. An arrangement as claimed in claim 1 wherein the arrangement comprises three shafts, the inner shaft (100, 200) substantially independently supported compared to an intermediate shaft (101) and an outer shaft (102).

3. An arrangement as claimed in claim 1 or claim 2 wherein the spaced bearings (222, 223; 304, 305) are supported upon a static cradle structure (221; 301).

4. An arrangement as claimed in claim 3 wherein the static cradle (221, 221', 301) is annular.

5. An arrangement as claimed in claim 3 or claim 4, wherein the static cradle (221, 221', 301) comprises a box structure.

6. An arrangement as claimed in claim 5 wherein the static cradle (221, 221', 301) comprises a three or four sided box structure.

7. An arrangement as claimed in any one of claims 3 to 6 wherein the static cradle (221, 221', 301) comprises a box structure having an end panel (230), the stiffness of the end panel (230) is capable of being changed in order to alter the fundamental critical frequency of the shaft for acceptable operation.

8. An arrangement as claimed in claim 7, wherein the stiffness of the end panel (230) is changed by altering its thickness.

9. An arrangement as claimed in any one of claims 3 to 8 wherein the static cradle (221, 221', 301) is attached to engine architecture capable of providing additional stiffness to the cradle (221, 221', 301).

10. An arrangement as claimed in claim 9, wherein the engine (10) architecture comprises an annular array of outlet guide vanes (232) which radially extend between radially inner airwash annular wall (236) and radially outer annular wall (234), and the static cradle (221, 221', 301) is attached radially inwardly of the engine (10) architecture.

11. An arrangement as claimed in any of claims 1, 2 or 3 wherein the spaced bearings (222, 223; 304, 305) form a two plane encastered support for the inner shaft (200).

12. An arrangement as claimed in any preceding claim wherein the spaced bearings (222, 223; 304, 305) are variable in terms of the spacing between them and/or upon the inner shaft (200) and/or structural stiffness and/or sprung bearing resilience.

13. An arrangement as claimed in any preceding claim wherein the inner shaft (200) is coupled to the low pressure turbine of an engine in use.

14. An arrangement as claimed in any preceding claim wherein the mounting bearing is also the locating bearing for the inner shaft.

15. A turbine engine incorporating a multi-shaft arrangement as claimed in any preceding claim.
